# EUROPEAN PATENT SPECIFICATION

(11) **EP 4 645 035 B1**
(45) Date of publication and mention of the grant of the patent: **11.11.2026**
(21) Application number: 23910326.0
(22) Date of filing: 21.12.2023
(51) Int. Cl.: G06F 3/01, G02B 27/01, H04R 1/10, G06F 1/16, G06F 1/3215, G06F 1/3234, G06F 1/3287, H04R 5/033, G06F 3/16, G02C 11/06

(54) **WEARABLE DEVICE AND CONTROL METHOD THEREFOR**
WEARABLE-VORRICHTUNG UND STEUERUNGSVERFAHREN DAFÜR
DISPOSITIF POUVANT ÊTRE PORTÉ ET SON PROCÉDÉ DE COMMANDE

(30) Priority: 26.12.2022 CN 202211675318
(43) Date of publication of application: 05.11.2025
(73) Proprietor: Vivo Mobile Communication Co., Ltd., Dongguan, Guangdong 523863 (CN)
(72) Inventor: LIU, Ninglin, Dongguan, Guangdong 523863 (CN)
(74) Representative: Lavoix
(86) International application number: PCT/CN2023/140522
(87) International publication number: WO 2024/140397

(56) References cited:
- CN-A- 111 650 748
- CN-A- 111 930 339
- CN-A- 112 262 360
- CN-A- 112 394 771
- CN-A- 112 655 221
- CN-A- 115 933 199
- CN-A- 116 009 694
- CN-A- 116 095 555
- CN-U- 212 321 984
- KR-A- 20170 024 436
- KR-Y1- 200 204 435
- US-A1- 2016 316 304
- US-B1- 10 869 120

## Description

### TECHNICAL FIELD

This application pertains to the field of wearable device design technologies, and specifically relates to a wearable device and a control method for a wearable device.

### BACKGROUND

With rapid development of science and technology, wearable devices gradually step into various aspects of lives. Among them, virtual reality (Virtual Reality, VR) glasses gradually step into people's lives as a type of novel smart terminal. The VR glasses bring a novel interaction manner, which are designed with more emphasis on ergonomics, thereby creating immersive experience in vision and hearing for users.

During use, VR glasses in related technologies need to be connected to an external headset (for example, a wireless headset), and users can have only immersive sound experience. However, when in a relatively private space or an application scenario in which friends interact with each other, users need more voice sharing, while the VR glasses in the related technologies cannot achieve such an effect. Certainly, such a problem is not limited to the VR glasses, but also exists in other types of wearable devices (for example, AR glasses). Related prior art is described for example in patent documents CN112655221A and US10869120B1.

### SUMMARY

This application discloses a wearable device, to resolve a problem that wearable devices in related technologies cannot implement voice sharing.

To resolve the foregoing technical problem, this application provides the following technical solutions:
According to a first aspect, this application discloses a wearable device, including a device body and a headset. The device body is provided with a sound guide channel, and the sound guide channel has a first sound outlet and a docking port. The headset is movably disposed on the device body, and capable of switching between a first position and a second position relative to the device body. The headset is provided with a second sound outlet. In a case that the headset is at the first position, the second sound outlet is connected to the docking port, and the headset outputs sound through the first sound outlet at first power. In a case that the headset is at the second position, the second sound outlet is separated from the docking port, and the headset outputs sound through the second sound outlet at second power. The first power is greater than the second power.

According to a second aspect, this application further discloses a control method for a wearable device. The wearable device is the wearable device according to the first aspect, and the control method includes: detecting the position of the headset; in a case that the headset is at the first position, controlling the headset to output sound through the first sound outlet at the first power; and in a case that the headset is at the second position, controlling the headset to output sound through the second sound outlet at the second power.

The technical solutions used in this application can achieve the following technical effects:
According to the wearable device disclosed in embodiments of this application, the headset is movably disposed on the device body, and capable of switching between the first position and the second position, so that when the headset is at the first position, the headset can output sound at the first power through the first sound outlet on the device body, and when the headset is at the second position, the headset can output sound at the second power through the second sound outlet on the headset. Because the first power is greater than the second power, when the headset outputs sound at the first power through the first sound outlet on the device body, sound of the wearable device can be played out loud, and when the headset outputs sound at the second power through the second sound outlet on the headset, sound of the wearable device can be output at a position close to an ear. In this way, the wearable device can achieve immersive sound experience, and can play sound out loud in some application scenarios in which people need to interact with each other, to achieve voice sharing.

### BRIEF DESCRIPTION OF DRAWINGS

FIG. 1 is a diagram of a wearable device with a headset at a second position according to an embodiment of this application;
FIG. 2 is a diagram of a wearable device with a headset at a first position according to an embodiment of this application;
FIG. 3 is a diagram of FIG. 2 from another perspective;
FIG. 4 is a partial diagram of a wearable device;
FIG. 5 is a decomposition diagram of a partial structure of a wearable device;
FIG. 6 is a flowchart of a control method for a wearable device according to an embodiment of this application;
FIG. 7 is a structural diagram of a wearable device according to an embodiment of this application;
FIG. 8 is a structural diagram of a wearable device according to an embodiment of this application; and
FIG. 9 is a diagram of a hardware structure of a wearable device according to an embodiment of this application.

Reference numerals:
100: device body, 110: glasses temple, 101: sound guide channel, 102: first sound outlet, 103: docking port, 104: first cable hole, 120: display module, 200: headset, 201: second sound outlet, 210: flexible part, 220: first dust filter, 230: sound output body, 240: headset housing, 300: connecting rod, 301: second cable hole, 302: shaft, 303: sound pickup hole, 310: first housing, 320: second housing, 410: Hall component, 420: first magnetic member, 430: second magnetic member, 440: third magnetic member, 500: ear, 610: second dust filter, and 620: sound pickup.

### DESCRIPTION OF EMBODIMENTS

To make objectives, technical solutions, and advantages of this application clearer, the following clearly and completely describes the technical solutions of this application with reference to specific embodiments of this application and corresponding accompanying drawings. It is clear that the described embodiments are only a part of rather than all embodiments of this application. All other embodiments obtained by a person of ordinary skill in the art based on embodiments of this application without creative efforts shall fall within the protection scope of this application.

The following describes, in detail with reference to accompanying drawings, technical solutions disclosed in embodiments of this application.

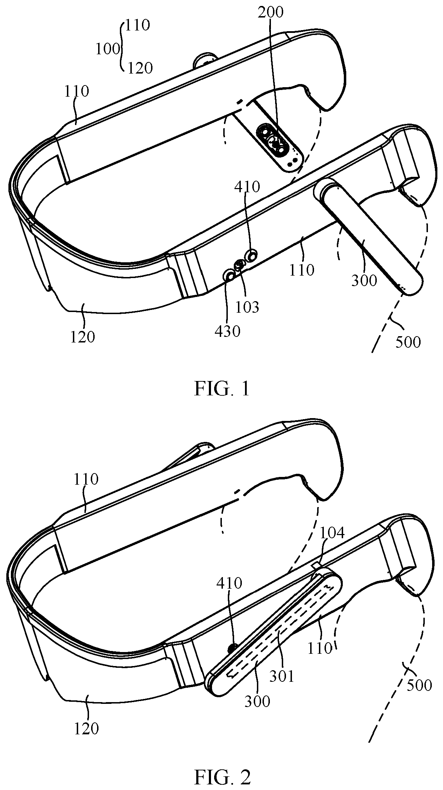

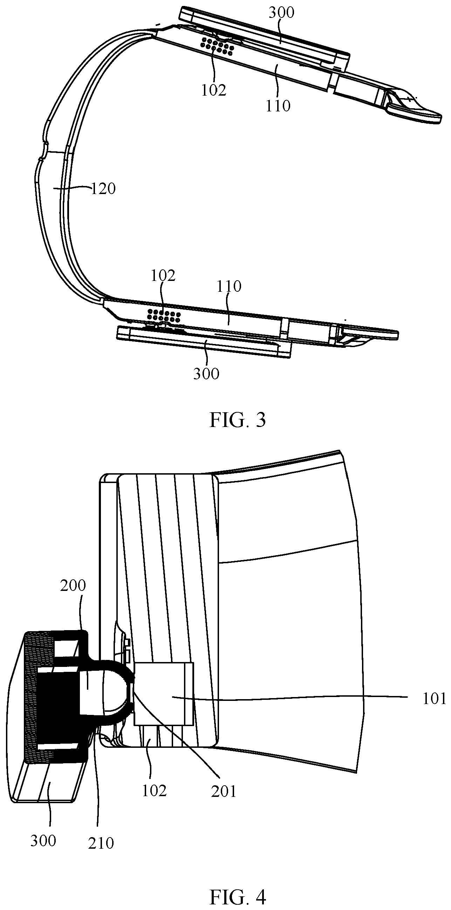

With reference to FIG. 1 to FIG. 9, this application discloses a wearable device, including a device body 100 and a headset 200. The device body 100 is provided with a sound guide channel 101, and the sound guide channel 101 has a first sound outlet 102 and a docking port 103.

The headset 200 is movably disposed on the device body 100, and capable of switching between a first position and a second position relative to the device body 100. The headset 200 is provided with a second sound outlet 201. The headset 200 may be movably connected to the device body 100 in a connection manner such as a pin shaft or a hinge. Certainly, the headset 200 may alternatively be movably connected to the device body 100 by another connector.

In a case that the headset 200 is at the first position, the second sound outlet 201 is connected to the docking port 103, and the headset 200 outputs sound through the first sound outlet 102 at first power. The sound output by the headset 200 may be output from the first sound outlet 102 after entering the sound guide channel 101 from the docking port 103.

In a case that the headset 200 is at the second position, the second sound outlet 201 is separated from the docking port 103, and the headset 200 outputs sound through the second sound outlet 201 at second power. The first power is greater than the second power.

It should be noted that, in a case that the wearable device is in a worn state and the headset 200 is at the second position, the headset 200 may rotate to a position of an ear 500 to output sound. In this case, the headset 200 may output sound at the lower second power, thereby implementing a receiver mode. In a case that the headset 200 is at the first position, the headset 200 may output sound at the higher first power, so that the headset 200 can play sound out loud, thereby implementing a speaker mode. Certainly, the headset may also switch between the first position and the second position when the wearable device is in an unworn state.

In addition, in this specification, the sound guide channel 101 functions to change a sound output direction, so that directions of the first sound outlet 102 and the second sound outlet 201 are different, and finally, at the second position, the second sound outlet 201 can output sound toward a position of an ear 500 of a user, while at the first position, the headset 200 can output sound in a direction different from the direction of the second sound outlet 201, thereby playing sound out loud for sharing.

According to the wearable device disclosed in this embodiment of this application, the headset 200 is movably disposed on the device body 100, and capable of switching between the first position and the second position, so that when the headset 200 is at the first position, the headset 200 can output sound at the first power through the first sound outlet 102 on the device body 100, and when the headset 200 is at the second position, the headset 200 can output sound at the second power through the second sound outlet 201 on the headset 200. Because the first power is greater than the second power, when the headset 200 outputs sound at the first power through the first sound outlet 102 on the device body 100, sound of the wearable device can be played out loud, and when the headset 200 outputs sound at the second power through the second sound outlet 201 on the headset 200, sound of the wearable device can be output at the position close to the ear. In this way, the wearable device can achieve immersive sound experience, and can play sound out loud in some application scenarios in which people need to interact with each other, to achieve voice sharing.

To facilitate switching of the headset 200 between the first position and the second position, optionally, the wearable device may further include a connecting rod 300. A first end of the connecting rod 300 may be rotatably connected to the device body 100, a second end of the connecting rod 300 may be connected to the headset 200, and the headset 200 is capable of switching between the first position and the second position as the connecting rod 300 rotates. The connecting rod 300 may be rotatably connected to the device body 100 by using a shaft 302.

According to the wearable device disclosed in this embodiment of this application, the connecting rod 300 is disposed, so that the headset 200 can switch between the first position and the second position through rotation of the connecting rod 300 relative to the device body 100. In this way, the headset 200 can switch between the positions more easily. In addition, the headset 200 can switch between the positions only by moving the connecting rod 300, which makes it more convenient for the user to operate.

Because the headset 200 and the device body 100 need to be electrically connected, to avoid a case that an electrical connector for electrically connecting the headset 200 and the device body 100 is exposed and pulled, optionally, the wearable device may further include an electrical connector. The device body may be provided with a first cable hole 104. The connecting rod 300 may be provided with a second cable hole 301. The first cable hole 104 may be connected to the second cable hole 301, the electrical connector may pass through the first cable hole 104 and the second cable hole 301, and the headset 200 may be electrically connected to the device body 100 by using the electrical connector.

According to the wearable device disclosed in this embodiment of this application, the device body is provided with the first cable hole 104, the connecting rod 300 is provided with the second cable hole 301, and the first cable hole 104 is connected to the second cable hole 301, so that the electrical connector can pass through the first cable hole 104 and the second cable hole 301, and the headset 200 is electrically connected to the device body 100 by using the electrical connector. In this way, the electrical connector is hidden in the first cable hole 104 and the second cable hole 301, thereby avoiding pulling the electrical connector.

Optionally, the wearable device may further include a sound pickup 620 and a second dust filter 610. The connecting rod 300 may be provided with a sound pickup hole 303. The sound pickup 620 may be disposed in the connecting rod 300. The second dust filter 610 may be disposed at the sound pickup hole 303. The sound pickup 620 may pick up sound through the sound pickup hole 303, to improve interaction performance of the wearable device.

The connecting rod 300 may include a first housing 310 and a second housing 320, the first housing 310 and the second housing 320 are detachably connected, and the sound pickup 620 may be disposed in a space enclosed by the first housing 310 and the second housing 320. The detachable connection between the first housing 310 and the second housing 320 facilitates installation and detachment of the sound pickup 620 and the headset 200. Certainly, it is also convenient to arrange the electrical connector. Specifically, the electrical connector may be a cable, a flexible circuit board, or the like. A specific type of the electrical connector is not limited in this embodiment of this application.

In an optional embodiment, the wearable device may further include a detection apparatus and a control component. The detection apparatus may be connected to at least one of the device body 100 and the headset 200. The detection apparatus is configured to detect a position of the headset 200. The control component may be connected to the detection apparatus and the headset 200. The control component may be configured to: in a case that the headset 200 is at the first position, control the headset 200 to output sound at the first power, and in a case that the headset 200 is at the second position, control the headset 200 to output sound at the second power. The detection apparatus may be a position sensor, an optical sensor, an SAR (specific absorption rate) antenna, or the like. A specific form of the detection apparatus is not limited herein.

According to the wearable device disclosed in this embodiment of this application, the detection apparatus and the control component are disposed, so that the detection apparatus can detect the position of the headset 200, and then the control component can control sound output power of the headset 200 based on the position of the headset 200 detected by the detection apparatus. In this way, the wearable device can automatically detect the position of the headset 200 and automatically control the sound output power of the headset 200, which can make the wearable device smarter and facilitate use of the user.

Further, the detection apparatus may include a Hall component 410 and a first magnetic member 420. One of the Hall component 410 and the first magnetic member 420 may be disposed on the device body 100, and the other may be connected to the headset 200. The Hall component 410 may determine the position of the headset 200 by detecting a magnetic field of the first magnetic member 420. It should be noted that when the headset 200 is at different positions relative to the device body 100, a position of the Hall component 410 relative to the first magnetic member 420 is different. Therefore, the magnetic field of the first magnetic member 420 detected by the Hall component 410 is different. In this way, the Hall component 410 can determine the position of the headset 200 by detecting the magnetic field of the first magnetic member 420.

According to the wearable device disclosed in this embodiment of this application, the detection apparatus is disposed as a structure including the Hall component 410 and the first magnetic member 420, and the Hall component 410 can determine the position of the headset 200 by detecting the magnetic field of the first magnetic member 420, so that detection on the position of the headset 200 is easier. In addition, the Hall component 410 and the first magnetic member 420 are commonly used, so that implementation is easy.

In an optional embodiment, one of the device body 100 and the headset 200 may be connected to the first magnetic member 420, and the other may be connected to a second magnetic member 430. In a case that the headset 200 is at the second position, the headset 200 may come into contact with the docking port 103 through attraction and cooperation between the first magnetic member 420 and the second magnetic member 430.

According to the wearable device disclosed in this embodiment of this application, the first magnetic member 420 and the second magnetic member 430 are disposed, so that in a case that the headset 200 is at the second position, the first magnetic member 420 and the second magnetic member 430 cooperate through magnetic attraction, and the headset 200 can be better connected to the docking port 103, thereby improving a connection effect between the headset 200 and the docking port 103, and avoiding sound leakage. In addition, the first magnetic member 420 is not only configured to cooperate with the Hall component 410, but also cooperates with the second magnetic member 430, so that the first magnetic member 420 functions for two purposes, thereby facilitating structural simplification of the wearable device.

Certainly, in some embodiments, the wearable device may be further provided with a third magnetic member 440. One of the device body 100 and the headset 200 may be connected to the third magnetic member 440, and the other may be connected to the second magnetic member 430. In a case that the headset 200 is at the second position, the headset 200 may come into contact with the docking port 103 through attraction and cooperation between the second magnetic member 430 and the third magnetic member 440. In this case, the first magnetic member 420 may be configured only to cooperate with the Hall component 410, thereby facilitating arrangement of the components.

In an optional embodiment, the headset 200 may include a flexible part 210, the second sound outlet 201 may be disposed on the flexible part 210, and in a case that the headset 200 is at the first position, the flexible part 210 may elastically come into contact with the docking port 103, and seal the docking port 103.

According to the wearable device disclosed in this embodiment of this application, the headset 200 is disposed as a structure including the flexible part 210, so that in a case that the headset 200 is at the first position, the flexible part 210 can elastically come into contact with the docking port 103, and seal the docking port 103. Because the flexible part 210 has a flexible characteristic and is in contact with the docking port 103, a better connection effect can be achieved between the first sound outlet 102 and the docking port 103, so that the headset 200 can better output sound from the first sound outlet, and can avoid sound leakage.

Optionally, the headset 200 may further include a headset housing 240, a sound output body 230, and a first dust filter 220. The sound output body 230 may be disposed in the headset housing 240, the first dust filter 220 may be disposed at the second sound outlet 201, and the first dust filter 220 may perform dust filtering for the second sound outlet 201.

In an optional embodiment, the wearable device may be smart glasses, the device body 100 may include a glasses temple 110, and the sound guide channel 101 may be disposed on the glasses temple 110. In this embodiment of this application, the wearable device is disposed as the smart glasses, so that the sound guide channel 101 can be disposed on the glasses temple 110. In this way, space of the glasses temple can be fully used to dispose the sound guide channel 101. The smart glasses may further include a display module 120, and the glasses temple 110 may be connected to the display module 120.

To prevent dust from falling into the wearable device from the first sound outlet 102, optionally, the first sound outlet 102 may be disposed on a bottom surface of the glasses temple 110.

This application further discloses a control method for a wearable device. The wearable device is a wearable device disclosed in the foregoing embodiment, and the disclosed control method includes the following steps:
S101. Detect the position of the headset 200.
S102. In a case that the headset 200 is at the first position, control the headset 200 to output sound through the first sound outlet 102 at the first power.
S103. In a case that the headset 200 is at the second position, control the headset 200 to output sound through the second sound outlet 201 at the second power.

Steps of the control method for a wearable device disclosed in this embodiment of this application are the same as or similar to functions implemented by the components in the wearable device disclosed in the foregoing embodiment, which may be mutually referenced. Details are not described herein again.

According to the control method for a wearable device disclosed in this embodiment of this application, when the headset 200 is at the first position, the headset 200 can output sound at the first power through the first sound outlet 102 on the device body 100, and when the headset 200 is at the second position, the headset 200 can output sound at the second power through the second sound outlet 201 on the headset 200, so that the headset 200 outputs sound at different power when at different positions, thereby implementing different sound output modes of the headset 200.

This application further discloses a wearable device, including a detection module 710 and a control module 720. The detection module 710 is configured to detect the position of the headset 200. The control module 720 is configured to: in a case that the headset is at the first position, control the headset 200 to output sound through the first sound outlet 102 at the first power; and the control module 720 is further configured to: in a case that the headset 200 is at the second position, control the headset 200 to output sound through the second sound outlet 201 at the second power. The detection module 710 may be the foregoing detection apparatus, and the control module 720 may be the foregoing control component, which may be specifically a central processing chip configured on the wearable device.

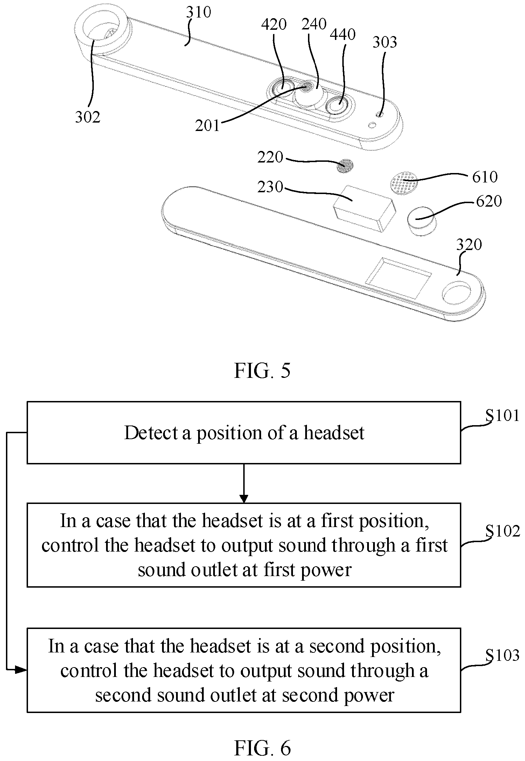

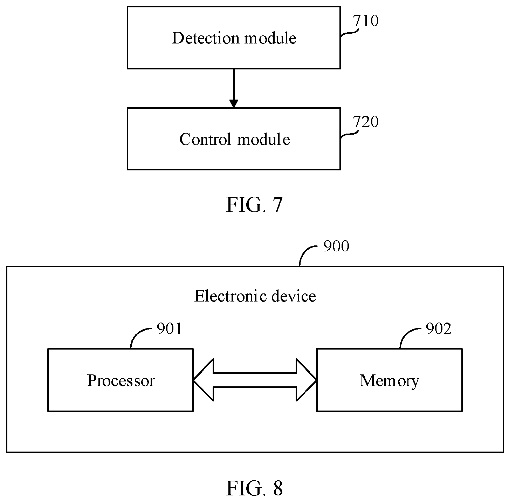

Optionally, as shown in FIG. 8, an embodiment of this application further provides a wearable device 900, including a processor 901, a memory 902, a program or an instruction stored in the memory 902 and executable on the processor 901. When the program or the instruction is executed by the processor 901, processes in the foregoing embodiment of the control method for a wearable device shown in FIG. 6 are implemented, and a same technical effect can be achieved. To avoid repetition, details are not described herein again.

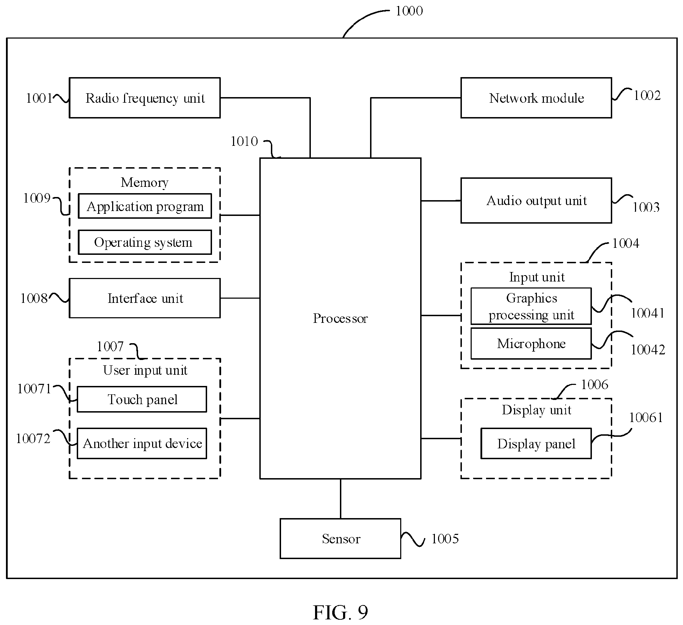

FIG. 9 is a diagram of a hardware structure of a wearable device according to an embodiment of this application.

The wearable device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the wearable device 1000 may further include a power supply such as a battery for supplying power to the components. The power supply may be logically connected to the processor 1010 by using a power management system, to implement functions such as charging, discharging, and power consumption management by using the power management system. The structure of the wearable device shown in FIG. 9 does not constitute a limitation on the wearable device. The wearable device may include more or fewer components than those shown in the figure, or combine some components, or have a different component arrangement. Details are not described herein.

The radio frequency unit 1001 may be configured to receive and send signals in information receiving or sending processes or call processes, which specifically receives downlink data from a base station, and then sends the downlink data to the processor 1010 for processing; and sends uplink data to the base station. Generally, the radio frequency unit 1001 includes but is not limited to an antenna, at least one amplifier, a transceiver, a coupler, a low-noise amplifier, a duplexer, and the like. In addition, the radio frequency unit 1001 may further communicate with a network and another device by using a wireless communication system.

The wearable device uses the network module 1002 to provide a user with wireless broadband Internet access, for example, help the user to receive and send emails, browse web pages, and access streaming media.

The audio output unit 1003 may convert audio data received by the radio frequency unit 1001 or the network module 1002 or stored in the memory 1009 into an audio signal and output the audio signal as sound. The audio output unit 1003 may include the foregoing sound output body 230.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus such as a camera in a video capture mode or an image capture mode.

The display unit 1006 may be considered as the foregoing display module 120. The display unit 1006 may include a display panel 10061, and the display panel 10061 may be configured in a form of a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button such as a volume control button or a switch button, a trackball, a mouse, or a joystick. Details are not described herein. The memory 1009 may be configured to store a software program and various data, including but not limited to an application program and an operating system. The processor 1010 may be integrated with an application processor and a modem processor. The application processor mainly processes an operating system, a user interface, an application program, and the like. The modem processor mainly processes wireless communication. It may be understood that the modem processor may not be integrated into the processor 1010.

The wearable device 1000 may further include at least one sensor 1005, for example, a light sensor, a motion sensor, and another sensor. Specifically, the light sensor includes an ambient light sensor and a proximity sensor. The ambient light sensor may adjust luminance of the display panel 10061 based on brightness of ambient light.

The display unit 1006 is configured to display information input by the user or information provided for the user. The display unit 1006 may include a display panel 10061, and the display panel 10061 may be configured in a form of a liquid crystal display (Liquid Crystal Display, LCD), an organic light-emitting diode (Organic Light-Emitting Diode, OLED), or the like.

The user input unit 1007 may be configured to receive input digit or character information and generate a key signal input related to user setting and function control of the wearable device. Specifically, the user input unit 1007 includes a touch panel 10071 and another input device 10072. The touch panel 10071, also referred to as a touchscreen, may collect a touch operation performed by the user on or near the touch panel 10071, for example, an operation performed by the user on the touch panel 10071 or near the touch panel 10071 by using any suitable object or accessory such as a finger or a stylus.

The touch panel 10071 may include two parts: a touch detection apparatus and a touch controller. The touch detection apparatus detects a touch orientation of the user, detects a signal generated by the touch operation, and transfers the signal to the touch controller. The touch controller receives touch information from the touch detection apparatus, converts the touch information into contact coordinates, and then sends the contact coordinates to the processor 1010. Moreover, the touch controller receives and executes a command sent from the processor 1010. In addition, the touch panel 10071 may be implemented as a resistive, capacitive, infrared, or surface sound wave type touch panel. In addition to the touch panel 10071, the user input unit 1007 may further include the another input device 10072. Specifically, the another input device 10072 may include but is not limited to a physical keyboard, a functional button such as a volume control button or a switch button, a trackball, a mouse, and a joystick. Details are not described herein.

Further, the touch panel 10071 may cover the display panel 10061. After detecting a touch operation on or near the touch panel 10071, the touch panel 10071 transfers the touch operation to the processor 1010 to determine a type of the touch event. Subsequently, the processor 1010 provides a corresponding visual output on the display panel 10061 based on the type of the touch event. In FIG. 9, the touch panel 10071 and the display panel 10061 are used as two independent parts to implement input and output functions of the wearable device, but in some embodiments, the touch panel 10071 and the display panel 10061 may be integrated to implement the input and output functions of the wearable device, which is not specifically limited herein.

The interface unit 1008 is an interface for connecting an external apparatus and the wearable device 1000. For example, the external apparatus may include a wired or wireless headset port, an external power supply or battery charger port, a wired or wireless data port, a storage card port, a port configured to connect to an apparatus having an identification module, an audio input/output I/O port, a video I/O port, and a headset port. The interface unit 1008 may be configured to receive an input, for example, data information and electricity, from the external apparatus and transmit the received input to one or more elements in the wearable device 1000, or may be configured to transmit data between the wearable device 1000 and the external apparatus.

The memory 1009 may be configured to store a software program and various data. The memory 1009 may mainly include a storage program area and a storage data area. The storage program area may store an operating system, an application program required by at least one function, such as a sound playing function and an image playing function, and the like. The storage data area may store data created based on use of the wearable device, such as audio data and an address book, and the like. In addition, the memory 1009 may include a high-speed random access memory, and may further include a non-volatile memory, for example, at least one magnetic disk storage device, a flash memory device, or another non-volatile solid-state storage device.

The processor 1010 is a control center of the wearable device, which is connected to various parts of the wearable device by using various interfaces and lines, and performs various functions and data processing of the wearable device by running or executing a software program and/or module stored in the memory 1009 and invoking data stored in the memory 1009, to perform overall monitoring on the wearable device. The processor 1010 may include one or more processing units. Preferably, the processor 1010 may be integrated with an application processor and a modem processor. The application processor mainly processes an operating system, a user interface, an application program, and the like. The modem processor mainly processes wireless communication. It may be understood that the modem processor may not be integrated into the processor 1010.

An embodiment of this application further provides a readable storage medium. A program or an instruction is stored in the readable storage medium. When the program or the instruction is executed by a processor, processes of the foregoing embodiment of the recording method can be implemented, and a same technical effect can be achieved. To avoid repetition, details are not described herein again.

The processor is the processor in the wearable device in the foregoing embodiment. The readable storage medium includes a computer-readable storage medium, such as a read-only memory (Read-Only Memory, ROM), a random access memory (Random Access Memory, RAM), a magnetic disk, or an optical disc.

An embodiment of this application provides a chip. The chip includes a processor and a communication interface. The communication interface is coupled to the processor. The processor is configured to run a program or an instruction to implement processes in the foregoing embodiment of the recording method, and a same technical effect can be achieved. To avoid repetition, details are not described herein again.

It should be understood that the chip in this embodiment of this application may also be referred to as a system-on-a-chip, a system chip, a chip system, a system on chip, or the like.

It should be noted that the terms "include", "comprise", or any other variation thereof in this specification is intended to cover a non-exclusive inclusion. Therefore, a process, method, object, or apparatus that includes a series of elements not only includes such elements, but also includes other elements not specified expressly, or may include inherent elements of the process, method, object, or apparatus. Unless otherwise specified, an element defined by "include a/an..." does not exclude other same elements existing in the process, method, object, or apparatus that includes the element. Moreover, it should be noted that the scope of the method and apparatus in embodiments of this application is not limited to executing the functions in the order shown or discussed, but may include executing the functions in a substantially concurrent manner or in a reverse order depending on the related functions. For example, the method described may be performed in an order different from that described, and various steps may be further added, omitted, or combined. In addition, features described with reference to some examples may be combined in other examples.

Based on the foregoing descriptions of the embodiments, a person skilled in the art may clearly understand that the methods of the foregoing embodiments may be implemented by software in addition to a necessary universal hardware platform or by hardware. In most circumstances, the former is a better implementation. Based on such an understanding, the technical solutions of this application essentially, or the part contributing to the prior art, may be implemented in a form of a computer software product. The computer software product may be stored in a storage medium, such as a ROM/RAM, a magnetic disk, or an optical disc, and include several instructions for instructing a terminal, which may be a mobile phone, a computer, a server, a network device, or the like, to perform the methods according to embodiments of this application.

The foregoing embodiments of this application focus on describing differences from each other, and different optimization features of the embodiments may be combined to form better embodiments provided that they are not contradictory. For brevity, details are not described herein.

Embodiments of this application have been described above with reference to the accompanying drawings, but this application is not limited to the specific embodiments, and the specific embodiments are merely examples rather than limitative. A person of ordinary skill in the art may make various variations under the teaching of this application without departing from the essence of this application and the protection scope of the claims, and such variations shall all fall within the protection scope of this application.

## Claims

1. A wearable device, comprising a device body (100) and a headset (200), wherein the device body (100) is provided with a sound guide channel (101), and the sound guide channel (101) has a first sound outlet (102) and a docking port (103), wherein
the headset (200) is movably disposed on the device body (100), and capable of switching between a first position and a second position relative to the device body (100); and the headset (200) is provided with a second sound outlet (201);
in a case that the headset (200) is at the first position, the second sound outlet (201) is connected to the docking port (103), and the headset (200) outputs sound through the first sound outlet (102) at first power; and
in a case that the headset (200) is at the second position, the second sound outlet (201) is separated from the docking port (103), and the headset (200) outputs sound through the second sound outlet (201) at second power, wherein
the first power is greater than the second power.

2. The wearable device according to claim 1, wherein the wearable device further comprises a connecting rod (300), a first end of the connecting rod (300) is rotatably connected to the device body (100), a second end of the connecting rod (300) is connected to the headset (200), and the headset (200) is capable of switching between the first position and the second position as the connecting rod (300) rotates.

3. The wearable device according to claim 2, wherein the wearable device further comprises an electrical connector, the device body (100) is provided with a first cable hole (104), and the connecting rod (300) is provided with a second cable hole (301); and
the first cable hole (104) is connected to the second cable hole (301), the electrical connector passes through the first cable hole (104) and the second cable hole (301), and the headset (200) is electrically connected to the device body (100) by using the electrical connector.

4. The wearable device according to claim 1, wherein the wearable device further comprises a detection apparatus and a control component, the detection apparatus is connected to at least one of the device body (100) and the headset (200), the detection apparatus is configured to detect a position of the headset (200), the control component is connected to the detection apparatus and the headset (200), and the control component is configured to: in a case that the headset (200) is at the first position, control the headset (200) to output sound at the first power, and in a case that the headset (200) is at the second position, control the headset (200) to output sound at the second power.

5. The wearable device according to claim 4, wherein the detection apparatus comprises a Hall component (410) and a first magnetic member (420), one of the Hall component (410) and the first magnetic member (420) is disposed on the device body (100), the other is connected to the headset (200), and the Hall component (410) determines the position of the headset (200) by detecting a magnetic field of the first magnetic member (420).

6. The wearable device according to claim 5, wherein one of the device body (100) and the headset (200) is connected to the first magnetic member (420), the other is connected to a second magnetic member (430), and in a case that the headset (200) is at the second position, the headset (200) comes into contact with the docking port (103) through attraction and cooperation between the first magnetic member (420) and the second magnetic member (430).

7. The wearable device according to claim 1, wherein the headset (200) comprises a flexible part (210), the second sound outlet (201) is disposed on the flexible part (210), and in a case that the headset (200) is at the first position, the flexible part (210) elastically comes into contact with the docking port (103), and seals the docking port (103).

8. The wearable device according to claim 1, wherein the wearable device is smart glasses, the device body (100) comprises a glasses temple (110), and the sound guide channel (101) is disposed on the glasses temple (110).

9. The wearable device according to claim 8, wherein the first sound outlet (102) is disposed on a bottom surface of the glasses temple (110).

10. A control method for a wearable device, whereby the wearable device is the wearable device according to any one of claims 1 to 9, and the control method comprises:
detecting (S101) the position of the headset (200);
in a case that the headset (200) is at the first position, controlling (S102) the headset (200) to output sound through the first sound outlet (102) at the first power; and
in a case that the headset (200) is at the second position, controlling (S103) the headset (200) to output sound through the second sound outlet (201) at the second power.

11. A readable storage medium, whereby a program or an instruction is stored in the readable storage medium, and when the program or the instruction is executed by a processor, steps of the control method for a wearable device according to claim 10 are implemented.

12. A chip, whereby the chip comprises a processor and a communication interface, the communication interface is coupled to the processor, and the processor is configured to run a program or an instruction to implement steps of the control method for a wearable device according to claim 10.

## Patentansprüche

1. Eine am Körper tragbare Vorrichtung, umfassend einen Vorrichtungskörper (100) und ein Headset (200), wobei der Vorrichtungskörper (100) mit einem Schallführungskanal (101) versehen ist und der Schallführungskanal (101) einen ersten Schallauslass (102) und einen Dockinganschluss (103) aufweist, wobei
das Headset (200) beweglich an dem Vorrichtungskörper (100) angeordnet ist und relativ zu dem Vorrichtungskörper (100) zwischen einer ersten Position und einer zweiten Position wechseln kann; und das Headset (200) mit einem zweiten Schallauslass (201) versehen ist;
in einem Fall, in dem sich das Headset (200) in der ersten Position befindet, der zweite Schallauslass (201) mit dem Dockinganschluss (103) verbunden ist und das Headset (200) Schall durch den ersten Schallauslass (102) mit einer ersten Leistung ausgibt; und
in einem Fall, in dem sich das Headset (200) in der zweiten Position befindet, der zweite Schallauslass (201) von dem Dockinganschluss (103) getrennt ist und das Headset (200) Schall durch den zweiten Schallauslass (201) mit einer zweiten Leistung ausgibt, wobei
die erste Leistung größer als die zweite Leistung ist.

2. Die am Körper tragbare Vorrichtung nach Anspruch 1, wobei die am Körper tragbare Vorrichtung ferner eine Verbindungsstange (300) umfasst, ein erstes Ende der Verbindungsstange (300) drehbar mit dem Vorrichtungskörper (100) verbunden ist, ein zweites Ende der Verbindungsstange (300) mit dem Headset (200) verbunden ist und das Headset (200) zwischen der ersten Position und der zweiten Position wechseln kann, wenn sich die Verbindungsstange (300) dreht.

3. Die am Körper tragbare Vorrichtung nach Anspruch 2, wobei die am Körper tragbare Vorrichtung ferner einen elektrischen Verbinder umfasst, der Vorrichtungskörper (100) mit einer ersten Kabelöffnung (104) versehen ist und die Verbindungsstange (300) mit einer zweiten Kabelöffnung (301) versehen ist; und
die erste Kabelöffnung (104) mit der zweiten Kabelöffnung (301) verbunden ist, der elektrische Verbinder durch die erste Kabelöffnung (104) und die zweite Kabelöffnung (301) verläuft und das Headset (200) mittels des elektrischen Verbinders elektrisch mit dem Vorrichtungskörper (100) verbunden ist.

4. Die am Körper tragbare Vorrichtung nach Anspruch 1, wobei die am Körper tragbare Vorrichtung ferner eine Erfassungsvorrichtung und eine Steuerkomponente umfasst, die Erfassungsvorrichtung mit mindestens einem von dem Vorrichtungskörper (100) und dem Headset (200) verbunden ist, die Erfassungsvorrichtung dazu konfiguriert ist, eine Position des Headsets (200) zu erfassen, die Steuerkomponente mit der Erfassungsvorrichtung und dem Headset (200) verbunden ist und die Steuerkomponente zu Folgendem konfiguriert ist: in einem Fall, in dem sich das Headset (200) in der ersten Position befindet, das Headset (200) zu steuern, Schall mit der ersten Leistung auszugeben, und in einem Fall, in dem sich das Headset (200) in der zweiten Position befindet, das Headset (200) zu steuern, Schall mit der zweiten Leistung auszugeben.

5. Die am Körper tragbare Vorrichtung nach Anspruch 4, wobei die Erfassungsvorrichtung eine Hall-Komponente (410) und ein erstes Magnetelement (420) umfasst, eines von der Hall-Komponente (410) und dem ersten Magnetelement (420) an dem Vorrichtungskörper (100) angeordnet ist, das andere mit dem Headset (200) verbunden ist und die Hall-Komponente (410) die Position des Headsets (200) durch Erfassen eines Magnetfelds des ersten Magnetelements (420) bestimmt.

6. Die am Körper tragbare Vorrichtung nach Anspruch 5, wobei eines von dem Vorrichtungskörper (100) und dem Headset (200) mit dem ersten Magnetelement (420) verbunden ist, das andere mit einem zweiten Magnetelement (430) verbunden ist und in einem Fall, in dem sich das Headset (200) in der zweiten Position befindet, das Headset (200) durch Anziehung und Zusammenwirken zwischen dem ersten Magnetelement (420) und dem zweiten Magnetelement (430) mit dem Dockinganschluss (103) in Kontakt kommt.

7. Die am Körper tragbare Vorrichtung nach Anspruch 1, wobei das Headset (200) einen flexiblen Teil (210) umfasst, der zweite Schallauslass (201) an dem flexiblen Teil (210) angeordnet ist und in einem Fall, in dem sich das Headset (200) in der ersten Position befindet, der flexible Teil (210) elastisch mit dem Dockinganschluss (103) in Kontakt kommt und den Dockinganschluss (103) abdichtet.

8. Die am Körper tragbare Vorrichtung nach Anspruch 1, wobei die am Körper tragbare Vorrichtung eine intelligente Brille ist, der Vorrichtungskörper (100) einen Brillenbügel (110) umfasst und der Schallführungskanal (101) an dem Brillenbügel (110) angeordnet ist.

9. Die am Körper tragbare Vorrichtung nach Anspruch 8, wobei der erste Schallauslass (102) an einer Unterseite des Brillenbügels (110) angeordnet ist.

10. Ein Steuerverfahren für eine am Körper tragbare Vorrichtung, wobei die am Körper tragbare Vorrichtung die am Körper tragbare Vorrichtung nach einem der Ansprüche 1 bis 9 ist und das Steuerverfahren Folgendes umfasst:
Erfassen (S101) der Position des Headsets (200);
in einem Fall, in dem sich das Headset (200) in der ersten Position befindet, Steuern (S102) des Headsets (200), Schall durch den ersten Schallauslass (102) mit der ersten Leistung auszugeben; und
in einem Fall, in dem sich das Headset (200) in der zweiten Position befindet, Steuern (S103) des Headsets (200), Schall durch den zweiten Schallauslass (201) mit der zweiten Leistung auszugeben.

11. Ein lesbares Speichermedium, wobei ein Programm oder eine Anweisung in dem lesbaren Speichermedium gespeichert ist und, wenn das Programm oder die Anweisung von einem Prozessor ausgeführt wird, Schritte des Steuerverfahrens für eine am Körper tragbare Vorrichtung nach Anspruch 10 implementiert werden.

12. Ein Chip, wobei der Chip einen Prozessor und eine Kommunikationsschnittstelle umfasst, die Kommunikationsschnittstelle mit dem Prozessor gekoppelt ist und der Prozessor dazu konfiguriert ist, ein Programm oder eine Anweisung auszuführen, um Schritte des Steuerverfahrens für eine am Körper tragbare Vorrichtung nach Anspruch 10 zu implementieren.

## Revendications

1. Un dispositif portable, comprenant un corps de dispositif (100) et un écouteur (200), dans lequel le corps de dispositif (100) est pourvu d'un canal de guidage sonore (101), et le canal de guidage sonore (101) présente une première sortie sonore (102) et un port d'accueil (103), dans lequel
l'écouteur (200) est disposé de manière mobile sur le corps de dispositif (100), et est capable de passer d'une première position à une deuxième position par rapport au corps de dispositif (100) ; et l'écouteur (200) est pourvu d'une deuxième sortie sonore (201) ;
dans le cas où l'écouteur (200) est dans la première position, la deuxième sortie sonore (201) est connectée au port d'accueil (103), et l'écouteur (200) émet du son par la première sortie sonore (102) à une première puissance ; et
dans le cas où l'écouteur (200) est dans la deuxième position, la deuxième sortie sonore (201) est séparée du port d'accueil (103), et l'écouteur (200) émet du son par la deuxième sortie sonore (201) à une deuxième puissance, dans lequel
la première puissance est supérieure à la deuxième puissance.

2. Le dispositif portable selon la revendication 1, dans lequel le dispositif portable comprend en outre une tige de liaison (300), une première extrémité de la tige de liaison (300) est connectée de manière rotative au corps de dispositif (100), une deuxième extrémité de la tige de liaison (300) est connectée à l'écouteur (200), et l'écouteur (200) est capable de passer de la première position à la deuxième position lorsque la tige de liaison (300) tourne.

3. Le dispositif portable selon la revendication 2, dans lequel le dispositif portable comprend en outre un connecteur électrique, le corps de dispositif (100) est pourvu d'un premier trou de câble (104), et la tige de liaison (300) est pourvue d'un deuxième trou de câble (301) ; et
le premier trou de câble (104) est connecté au deuxième trou de câble (301), le connecteur électrique passe à travers le premier trou de câble (104) et le deuxième trou de câble (301), et l'écouteur (200) est connecté électriquement au corps de dispositif (100) au moyen du connecteur électrique.

4. Le dispositif portable selon la revendication 1, dans lequel le dispositif portable comprend en outre un appareil de détection et un composant de commande, l'appareil de détection est connecté à au moins l'un du corps de dispositif (100) et de l'écouteur (200), l'appareil de détection est configuré pour détecter une position de l'écouteur (200), le composant de commande est connecté à l'appareil de détection et à l'écouteur (200), et le composant de commande est configuré pour : dans le cas où l'écouteur (200) est dans la première position, commander à l'écouteur (200) d'émettre du son à la première puissance, et dans le cas où l'écouteur (200) est dans la deuxième position, commander à l'écouteur (200) d'émettre du son à la deuxième puissance.

5. Le dispositif portable selon la revendication 4, dans lequel l'appareil de détection comprend un composant à effet Hall (410) et un premier élément magnétique (420), l'un parmi le composant à effet Hall (410) et le premier élément magnétique (420) est disposé sur le corps de dispositif (100), l'autre est connecté à l'écouteur (200), et le composant à effet Hall (410) détermine la position de l'écouteur (200) en détectant un champ magnétique du premier élément magnétique (420).

6. Le dispositif portable selon la revendication 5, dans lequel l'un parmi le corps de dispositif (100) et l'écouteur (200) est connecté au premier élément magnétique (420), l'autre est connecté à un deuxième élément magnétique (430), et dans le cas où l'écouteur (200) est dans la deuxième position, l'écouteur (200) entre en contact avec le port d'accueil (103) par attraction et coopération entre le premier élément magnétique (420) et le deuxième élément magnétique (430).

7. Le dispositif portable selon la revendication 1, dans lequel l'écouteur (200) comprend une partie flexible (210), la deuxième sortie sonore (201) est disposée sur la partie flexible (210), et dans le cas où l'écouteur (200) est dans la première position, la partie flexible (210) entre élastiquement en contact avec le port d'accueil (103), et obture le port d'accueil (103).

8. Le dispositif portable selon la revendication 1, dans lequel le dispositif portable est constitué de lunettes intelligentes, le corps de dispositif (100) comprend une branche de lunettes (110), et le canal de guidage sonore (101) est disposé sur la branche de lunettes (110).

9. Le dispositif portable selon la revendication 8, dans lequel la première sortie sonore (102) est disposée sur une surface inférieure de la branche de lunettes (110).

10. Un procédé de commande pour un dispositif portable, dans lequel le dispositif portable est le dispositif portable selon l'une quelconque des revendications 1 à 9, et le procédé de commande comprend :
la détection (S101) de la position de l'écouteur (200) ;
dans le cas où l'écouteur (200) est dans la première position, la commande (S102) de l'écouteur (200) pour émettre du son par la première sortie sonore (102) à la première puissance ; et
dans le cas où l'écouteur (200) est dans la deuxième position, la commande (S103) de l'écouteur (200) pour émettre du son par la deuxième sortie sonore (201) à la deuxième puissance.

11. Un support de stockage lisible, dans lequel un programme ou une instruction est stocké dans le support de stockage lisible, et lorsque le programme ou l'instruction est exécuté par un processeur, des étapes du procédé de commande pour un dispositif portable selon la revendication 10 sont mises en œuvre.

12. Une puce, dans laquelle la puce comprend un processeur et une interface de communication, l'interface de communication est couplée au processeur, et le processeur est configuré pour exécuter un programme ou une instruction afin de mettre en œuvre des étapes du procédé de commande pour un dispositif portable selon la revendication 10.
